# EUROPEAN PATENT APPLICATION

(11) **EP 4 456 221 A1**
(43) Date of publication of application: **30.10.2024**
(21) Application number: 22911522.5
(22) Date of filing: 23.09.2022
(51) Int. Cl.: H01M 10/04, H01M 4/131, H01M 4/86, H01M 4/62, H01M 4/58, H01M 50/40, H01M 4/02

(54) **LITHIUM SECONDARY BATTERY AND METHOD FOR PRODUCING LITHIUM SECONDARY BATTERY**

(30) Priority: 24.12.2021 KR 20210187034; 22.09.2022 KR 20220120348
(71) Applicant: LG Energy Solution, Ltd., Seoul 07335 (KR)
(72) Inventor: KIM, Yun Jung, Daejeon 34122 (KR); HONG, Kyung Sik, Daejeon 34122 (KR); HAN, Sueng Hoon, Daejeon 34122 (KR)
(74) Representative: Goddar, Heinz J.
(86) International application number: PCT/KR2022/014300
(87) International publication number: WO 2023/120883

(57) **Abstract**

The present invention discloses a lithium secondary battery and a method for manufacturing the lithium secondary battery, wherein the lithium secondary battery comprises a negative electrode-separator composite including a negative electrode and a separator, wherein the negative electrode includes a lithium metal layer, and the separator includes a first separator disposed on one surface of the negative electrode and a second separator disposed on the other surface of the negative electrode, wherein at least a portion of an edge of the first separator and at least a portion of an edge of the second separator adhere to each other to form a sealing portion while the first separator and the second separator accommodate the negative electrode therein, wherein the air permeability of the sealing portion is 50,000 sec/100 cc or greater.

## Description

### TECHNICAL FIELD

### Cross-reference to Related Applications

This application claims the benefit of Korean Patent Application Nos. 10-2021-0187034, filed on December 24, 2021, and 10-2022-0120348, filed on September 22, 2022, in the Korean Intellectual Property Office, the disclosures of which are incorporated herein in their entirety by reference.

### FIELD OF DISCLOSURE

The present disclosure relates to a lithium secondary battery which includes a negative electrode-separator composite having a negative electrode and a separator, wherein the negative electrode includes a lithium metal layer, and the separator includes a first separator disposed on one surface of the negative electrode and a second separator disposed on the other surface of the negative electrode, wherein at least a portion of an edge of the first separator and at least a portion of an edge of the second separator adhere to each other to form a sealing portion, and the negative electrode is accommodated inside the separator, wherein the sealing portion has air permeability of 50,000 sec/100 cc or greater.

### BACKGROUND

Recently, electronic products, electronic devices, communication devices, and the like are being rapidly reduced in size and weight, and as the need for electric vehicles has emerged greatly in relation to environmental issues, the demand for improving the performance of secondary batteries used as power sources of such products is also increasing. Among the secondary batteries, a lithium secondary battery is in the spotlight as a high-performance battery due to the high energy density and high standard electrode potential thereof. The lithium secondary battery is generally composed of a positive electrode, a negative electrode, an electrolyte, and a separator.

As the negative electrode, a lithium metal negative electrode may be used. The lithium metal negative electrode may be composed of a lithium metal layer, or may refer to a negative electrode having a form in which a lithium metal layer is disposed on a negative electrode current collector.

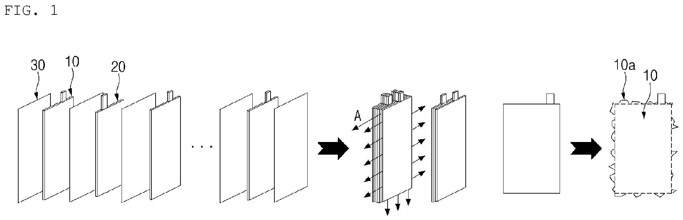

Referring to FIG. 1, when a lithium metal negative electrode 10 is used, lithium is precipitated from the negative electrode 10 during the driving of the battery, causing a problem in which lithium is grown (e.g., lithium dendrite) on the surface of the negative electrode. The lithium growth may be formed not only on a wide surface (in a vertical direction) of the negative electrode facing the positive electrode, but also on a side surface of the negative electrode (in a horizontal direction, direction A in FIG. 1) . In this case, in a process of driving the battery, the size of the negative electrode increases in the horizontal direction, and lithium 10a grown on the side surface of the negative electrode may grow to the outside of a separator 30 to cause a short circuit between a positive electrode 20 and the negative electrode 10. The above phenomenon may lead to premature deterioration and lifespan degradation of the battery, and particularly, as a driving current of the battery increases, the above problem situation is further accelerated. Meanwhile, since the lithium 10a grows on the side surface of the negative electrode in a state in which an appropriate pressure is not applied, the lithium 10a is formed in a non-uniform shape to reduce reversibility of the lithium metal negative electrode 10, and performance of the battery, particularly, lifespan of the battery is degraded due to an increase in side reactions of the electrolyte. In addition, since lithium has a low melting point, during the driving of the battery, the lithium metal is melted and outflows in a direction of a side surface of the separator 30, so that a short circuit between the positive electrode 20 and the negative electrode 10 may more easily occur.

In order to solve the problem, a lithium metal negative electrode has been conventionally manufactured to have a small size, or various electrolytes capable of suppressing lithium growth and stabilizing a negative electrode have been used. However, when a lithium metal negative electrode is manufactured to have a small size, there is a problem in which the capacity of a battery is degraded. In addition, attempts to use a specific electrolyte to stabilize a negative electrode do not completely block the possibility that a positive electrode and a negative electrode are short-circuited due to lithium grown in a horizontal direction of the negative electrode, so that there is still a problem of degradation in lifespan and safety of a battery.

Therefore, there has been a demand for a new technology capable of suppressing the growth of lithium in the horizontal direction of the negative electrode.

### DISCLOSURE OF THE INVENTION

### TECHNICAL PROBLEM

An aspect of the present disclosure provides a lithium secondary battery capable of suppressing excessive and non-uniform growth of lithium on a side surface of a negative electrode including a lithium metal layer.

Another aspect of the present disclosure provides a method for manufacturing the lithium secondary battery.

### TECHNICAL SOLUTION

According to an aspect of the present disclosure, there is provided a lithium secondary battery including a negative electrode-separator composite having a negative electrode and a separator, wherein the negative electrode includes a lithium metal layer, and the separator includes a first separator disposed on one surface of the negative electrode and a second separator disposed on the other surface of the negative electrode, wherein at least a portion of an edge of the first separator and at least a portion of an edge of the second separator adhere to each other to form a sealing portion, and the negative electrode is accommodated inside the separator, wherein the sealing portion has air permeability of 50,000 sec/100 cc or greater.

According to another aspect of the present disclosure, there is provided a method for manufacturing a lithium secondary battery, the method including the steps of disposing a first separator on one surface of a negative electrode including a lithium metal layer and disposing a second separator on the other surface of the negative electrode, and adhering at least a portion of an edge of the first separator and at least a portion of an edge of the second separator to each other to form a sealing portion, thereby preparing a negative electrode-separator composite, wherein air permeability of the sealing portion is 50,000 sec/100 cc or greater.

### ADVANTAGEOUS EFFECTS

According to the present disclosure, due to a sealing portion formed by the adhesion of a first separator and a second separator, the exposure of a side surface of a negative electrode including a lithium metal layer may be minimized. Accordingly, it is possible to suppress lithium grown during the driving of a battery from excessively protruding from a side surface of a negative electrode, so that a short circuit between a positive electrode and the negative electrode may be effectively prevented.

In addition, when the lithium grows on the side surface of a negative electrode, an appropriate pressure may be applied to the side surface of the negative electrode by the sealing portion. Accordingly, since the lithium may grow uniformly on the side surface of the negative electrode, reversibility and lifespan of the negative electrode may be improved.

Furthermore, even if the lithium is partially melted due to heat generated during the driving of the battery, escape of the molten lithium to the outside of the negative electrode-separator composite may be effectively suppressed.

Meanwhile, the sealing portion has a specific air permeability. Therefore, even when a positive electrode includes a positive electrode active material containing a sulfur element (e.g., when a lithium secondary battery is a lithium-sulfur secondary battery), a phenomenon in which lithium polysulfide formed from the positive electrode comes into contact with the negative electrode to cause a side reaction may be suppressed. Accordingly, the safety and lifespan properties of the lithium secondary battery may be improved.

### BRIEF DESCRIPTION OF THE DRAWINGS

FIG. 1 is a schematic diagram for describing problems occurring in a conventional lithium secondary battery.
FIG. 2 is a schematic view of a lithium secondary battery according to an embodiment of the present disclosure.
FIG. 3 is a schematic view showing a negative electrode-separator composite included in a lithium secondary battery according to an embodiment of the present disclosure.
FIG. 4 is a schematic view for describing a method for manufacturing of a lithium secondary battery according to an embodiment of the present disclosure.
FIG. 5 is a schematic view for describing a method for manufacturing of a lithium secondary battery according to an embodiment of the present disclosure.
FIG. 6 is a schematic view for describing a method for manufacturing of a lithium secondary battery according to an embodiment of the present disclosure.
FIG. 7 is a graph showing a capacity per cycle of each of lithium secondary batteries of Example 1 and Comparative Examples 1 and 2.
FIG. 8 is a graph showing a Coulombic efficiency per cycle of the lithium secondary batteries of Example 1 and Comparative Examples 1 and 2.
FIG. 9 is a photograph of a negative electrode in the battery after driving the lithium secondary battery of Example 1 for 240 cycles.
FIG. 10 is a photograph of a negative electrode in the battery after driving the lithium secondary battery of Comparative Example 1 for 60 cycles.

### MODE FOR CARRYING OUT THE INVENTION

Hereinafter, the present disclosure will be described in more detail to facilitate understanding of the present disclosure.

It will be understood that words or terms used in the specification and claims shall not be interpreted as having the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular exemplary embodiments only and is not intended to be limiting of the present disclosure. The terms of a singular form may include plural forms unless the context clearly indicates otherwise.

In the present specification, it should be understood that the terms "include," "comprise," or "have" are intended to specify the presence of stated features, numbers, steps, elements, or combinations thereof, but do not preclude the presence or addition of one or more other features, numbers, steps, elements, or combinations thereof.

In the present specification, air permeability may be measured under the following conditions using ASAHI SEIKO Company's Oken Type Air-permeability & Smoothness Testing Controller equipment.
Time: 6 sec
Value: 500
Measure Mode: JIS(sec)

### <Lithium secondary battery>

A lithium secondary battery according to an embodiment of the present disclosure includes a negative electrode-separator composite having a negative electrode and a separator, wherein the negative electrode includes a lithium metal layer, and the separator includes a first separator disposed on one surface of the negative electrode and a second separator disposed on the other surface of the negative electrode, wherein at least a portion of an edge of the first separator and at least a portion of an edge of the second separator adhere to each other to form a sealing portion, and the negative electrode is accommodated inside the separator, wherein the air permeability of the sealing portion may be 50,000 sec/100 cc or greater.

### (1) Negative electrode-separator composite

The lithium secondary battery may include a negative electrode-separator composite. The negative electrode-separator composite may include a negative electrode and a separator.

### 1) Negative electrode

The negative electrode may be a lithium metal negative electrode. The lithium metal negative electrode may mean a negative electrode of a lithium metal secondary battery (including a lithium-sulfur secondary battery) in the art.

The negative electrode may include a lithium metal layer. The lithium metal layer may serve to store and release lithium. The lithium metal layer may include at least one of a lithium metal and a lithium alloy, and specifically, may be composed of at least one of a lithium metal and a lithium alloy. For example, the lithium metal layer may be composed of a lithium metal. The lithium alloy includes an element alloyable with lithium, and at this time, the element may be Si, Sn, C, Pt, Ir, Ni, Cu, Ti, Na, K, Rb, Cs, Fr, Be, Mg, Ca, Sr, Sb, Pb, In, Zn, Ba, Ra, Ge, Al, Co, or an alloy thereof.

The lithium metal layer may be a sheet or a foil. The lithium metal layer itself may constitute the negative electrode. On the other hand, the negative electrode may further include a negative electrode current collector, and may have a form in which the lithium metal or lithium alloy may be deposited or coated on the negative electrode current collector by a dry process, or a metal and an alloy in a particle phase are deposited or coated by a wet process, and the like. The negative electrode current collector is not particularly limited as long as it has a conductivity without causing a chemical change in a battery, and for example, copper, stainless steel, aluminum, nickel, titanium, fired carbon, copper or stainless steel that is surface-treated with one of carbon, nickel, titanium, silver, and the like, an aluminum-cadmium alloy, and the like may be used. In addition, the negative electrode current collector may be used in various forms such as a film, a sheet, a foil, a net, a porous body, a foam, and a non-woven body which have microscopic irregularities formed/not formed on the surface thereof.

The negative electrode may be in a quadrangular sheet form, and may have a predetermined thickness.

Meanwhile, the negative electrode may further include a negative electrode tab. The negative electrode tab is connected to an external wire to allow a current to be moved between the negative electrode and the outside. The negative electrode tab may have a shape protruding from a side surface of the negative electrode.

### 2) Separator

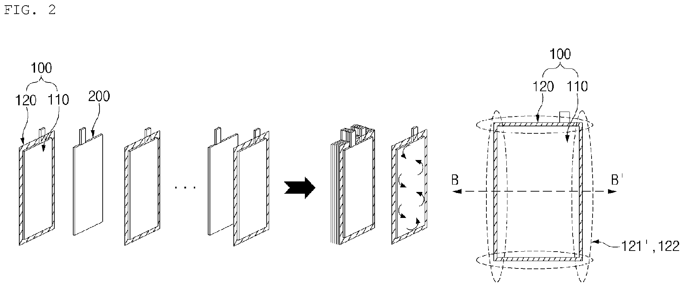

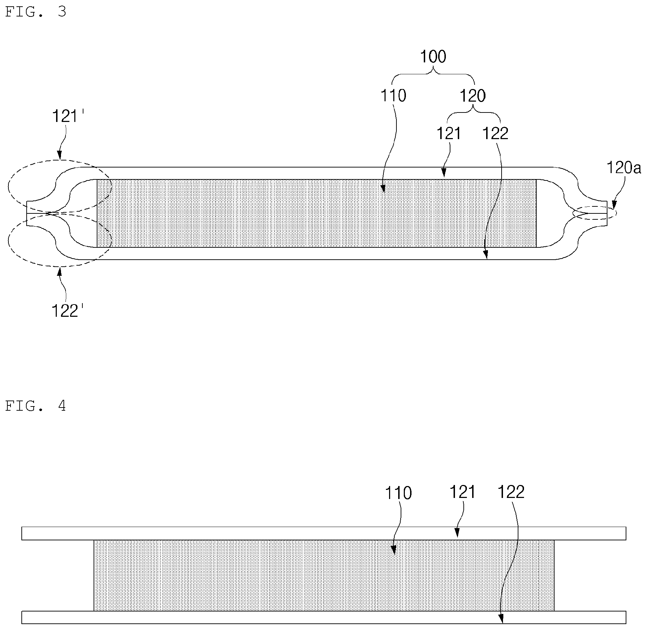

FIG. 2 is a schematic view for describing a lithium secondary battery according to an embodiment of the present disclosure, and FIG. 3 is a schematic view showing a cross-section B-B' of a negative electrode-separator composite 100 illustrated in FIG. 2.

Referring to FIG. 2 and FIG. 3, the negative electrode-separator composite 100 includes a negative electrode 110 and a separator 120, and the separator 120 may be disposed on the negative electrode 110. The separator 120 may include a first separator 121 and a second separator 122.

The first separator 121 may be disposed on one surface of the negative electrode 110, and the second separator 121 may be disposed on the other surface opposite to the one surface of the negative electrode 110.

The first separator 121 and the second separator 122 may each include a porous substrate. As the porous substrate, any porous substrate commonly used in an electrochemical device may be used, and for example, a polyolefin-based porous membrane or a non-woven fabric may be used, but is not particularly limited thereto.

Examples of the polyolefin-based porous membrane include a membrane formed of a polyolefin-based polymer such as polyethylene, for example, high-density polyethylene, linear low-density polyethylene, low-density polyethylene, and ultra-high molecular weight polyethylene, polypropylene, polybutylene, and polypentene alone or formed of a polymer obtained by mixing the same.

In addition to a polyolefin-based non-woven fabric, the non-woven fabric may be formed of, for example, polyethyleneterephthalate, polybutyleneterephthalate, polyester, polyacetal, polyamide, polycarbonate, polyimide, polyetheretherketone, polyethersulfone, polyphenyleneoxide, polyphenylenesulfide, polyethylenenaphthalate, and the like alone or formed of a polymer obtained by mixing the same. In addition, the non-woven fabric may include a non-woven fabric made of a glass fiber or ceramic material having a high melting point. In addition, the structure of the non-woven fabric may be that of a spunbond non-woven fabric or a melt-blown non-woven fabric composed of long fibers.

The thickness of the porous substrate is not particularly limited, but may be 1 to 100 um, preferably 5 to 50 µm.

The size and porosity of pores present in the porous substrate are neither particularly limited, but may be 0.001 to 50 um and 10 to 95%, respectively.

In some cases, each of the first separator and the second separator may include an adhesive layer (not shown) disposed on the porous substrate. The adhesive layer is disposed between the negative electrode and the separator, and may include an adhesive binder. Accordingly, the negative electrode and the separator may stably contact each other, so that the stability of the negative electrode-separator composite may be improved.

Meanwhile, in some cases, the separator (each of the first separator and the second separator) may further include a coating layer (not shown) disposed on the porous substrate. The coating layer may be composed of inorganic particles or inorganic particles and a binder. The thermal stability of the separator may be improved due to the coating layer.

The coating layer may include pores. The pores may have a size that is difficult for lithium polysulfide to pass through. Specifically, the pores may include pores having an average pore diameter of 0.1 nm to 1,000 nm, specifically 0.5 nm to 500 nm. Accordingly, when a positive electrode includes a positive electrode active material containing a sulfur element (in the case of a lithium-sulfur secondary battery), lithium polysulfide formed in the positive electrode is suppressed from reaching the negative electrode, so that a side reaction by the lithium polysulfide is suppressed, and accordingly, lifespan properties and efficiency of the battery may be improved.

At least portions of edges 121' and 122' of the respective first separator 121 and the second separator 122 may adhere to each other to form a sealing portion 120a. The edges 121' and 122' refer to regions not in contact with the negative electrode 100 in the respective first separator 121 and the second separator 122. The edges 121' and 122' may be formed parallel to four side surfaces of the negative electrode 100.

Due to the sealing portion 120a, the exposure of side surfaces of the negative electrode 110 including the lithium metal layer may be minimized. Accordingly, it is possible to suppress lithium grown during the driving of the battery from excessively protruding from a side surface of the negative electrode 100, so that a short circuit between a positive electrode 200 and the negative electrode 110 may be effectively prevented. In addition, even when the lithium is grown on a side surface of the negative electrode 110, since an appropriate pressure may be applied to the side surface of the negative electrode 110 by the sealing portion 120a, the lithium may be uniformly grown on the side surface of the negative electrode 110, so that reversibility and lifespan of the negative electrode 110 may be improved. Furthermore, even if the lithium is partially melted due to heat generated during the driving of the battery, escape of the molten lithium to the outside of the negative electrode-separator composite 100 may be effectively suppressed. Accordingly, the lifespan properties of the lithium secondary battery may be improved.

The sealing portion 120a may be formed so that the rest of the negative electrode 110 except for the negative electrode tab (not shown) is not exposed to the outside of the separator 120. That is, the edges of each of the first separator 121 and the second separator 122 may adhere to each other surrounding the four side surfaces of the negative electrode, so that the sealing portion 120a may be present surrounding the four side surfaces of the negative electrode 110, but the sealing portion 120a may not be formed only in a region of each of the first separator 121 and the second separator 122 which is in contact with the negative electrode tab. When the negative electrode-separator composite 100 having the above form is formed, it is possible to suppress lithium grown during the driving of the battery from excessively protruding from a side surface of the negative electrode, so that a short circuit between the positive electrode 200 and the negative electrode 110 may be more effectively prevented. The escape of the molten lithium to the outside the negative electrode-separator composite 100 may be more effectively suppressed. Accordingly, the lifespan properties of the lithium secondary battery may be more effectively improved. Meanwhile, 'the negative electrode tab' and 'the first separator and/or the second separator' may adhere to and in contact with each other, or may be separated from each other.

The air permeability of the sealing portion 120a may be 50,000 sec/100 cc or greater, specifically, 65,000 sec/100 cc to 100,000 sec/100 cc, and more specifically, 80,000 sec/100 cc to 100,000 sec/100 cc. When the air permeability is less than 50,000 sec/100 cc, grown lithium may pass through the sealing portion 120a and be present outside the separator, so that stability of the battery may be degraded. In addition, when the air permeability is less than 50,000 sec/100 cc, when a positive electrode includes a positive electrode active material containing a sulfur element (in the case of a lithium-sulfur secondary battery), lithium polysulfide formed in the positive electrode may pass through the sealing portion 120a and cause a side reaction with the negative electrode. Accordingly, the lifespan properties of the battery may be degraded.

That is, controlling the air permeability of the sealing portion 120a to 50,000 sec/100 cc or greater is a very important factor in improving the life properties of the battery. In addition, the air permeability range may be derived by disposing the negative electrode in contact with the first separator and the second separator before manufacturing an electrode assembly including all of the negative electrode, the separator, and the positive electrode, and then performing thermal fusing with an appropriate level of heat.

In the case in which the positive electrode includes the positive electrode active material containing a sulfur element, when a positive electrode-separator composite is prepared by adhering separators disposed on both surfaces of the positive electrode to contact each other rather than preparing the negative electrode-separator composite, lithium polysulfide is not allowed to escape from the inside of the positive electrode-separator composite due to the high air permeability (50,000sec/100cc or more) of a sealing portion of the positive electrode-separator composite, and thus, the viscosity of an electrolyte close to the positive electrode becomes excessively high, and there is a problem in which battery driving capability is degraded. The present disclosure forms a negative electrode-separator composite with respect to a negative electrode rather than a positive electrode, and thus the aforementioned problem does not occur.

### 3) Positive electrode

The positive electrode may include a positive electrode active material. Specifically, the positive electrode may include a positive electrode active material layer, and the positive electrode active material may be included in the positive electrode active material layer. The positive electrode active material layer may form a positive electrode by itself, and, alternatively, a positive electrode may be configured in a state in which the positive electrode active material layer is disposed on a positive electrode current collector.

The positive electrode active material may be a positive electrode active material commonly used in the art. Specifically, the positive electrode active material may include a layered compound such as a lithium cobalt oxide (LiCoO₂) and a lithium nickel oxide (LiNiO₂) or a compound substituted with one or more transition metals, a lithium iron oxide such as LiFe₃O₄, or Li₁₊ₐM_{b}O_{2+c}. M may be at least one element selected from the group consisting of Ni, Co, Mn, Fe, P, Al, Mg, Ca, Zr, Zn, Ti, Ru, Nb, W, B, Si, Na, K, Mo, and V, wherein it may satisfy -0.2≤a≤0.2, 0<b≤2, and 0≤c≤2.

The positive electrode active material may include a sulfur-based compound containing a sulfur element. The sulfur-based compound includes one or more selected from the group consisting of an inorganic sulfur (S₈), Li₂Sₙ₁(n1≥1), a disulfide compound, an organic sulfur compound, and a carbon-sulfur polymer ((C₂Sₓ)ₙ, x=2.5 to 50, n2≥2). Preferably, the inorganic sulfur (Ss) may be used.

The sulfur-based compound alone has no electrical conductivity, and thus, is used in combination with a conductive material. Preferably, the positive electrode active material may be a sulfur-carbon composite.

In the sulfur-carbon composite, carbon is a porous carbon material and provides a skeleton so that sulfur, which is a positive electrode active material, may be fixed uniformly and stably, and complements the electrical conductivity of sulfur so that an electrochemical reaction can proceed smoothly.

The porous carbon material may be generally prepared by carbonizing precursors of various carbon materials. The porous carbon material includes irregular pores therein, and an average diameter of the pores is in the range of 1 to 200 nm, and the porous degree or porosity may be in the range of 10 to 90% of the entire volume of the porous body. If the average diameter of the pores is less than the above range, the pore size is only at a molecular level, and impregnation is impossible, and on that other hand, if greater than the above range, the mechanical strength of porous carbon is weakened, which is not desirable to be applied to a manufacturing process of an electrode.

The shape of the porous carbon material is spherical, rod-shaped, needle-shaped, plate-shaped, tubular, or bulk, and may be used without limitation as long as it is commonly used in a lithium-sulfur battery.

The porous carbon material may have a porous structure or a high specific surface area and may be any one commonly used in the art. For example, the porous carbon material may be one or more selected from the group consisting of graphite, graphene, carbon black, such as Denka black, acetylene black, Ketjen black, channel black, furnace black, lamp black, and thermal black, a carbon nanotube (CNT) such as a single-walled carbon nanotube (SWCNT) and a multi-walled carbon nanotube (MWCNT), a carbon fiber such as a graphite nanofiber (GNF), a carbon nanofiber (CNF), and an activated carbon fiber (ACF), natural graphite, artificial graphite, expanded graphite, and activated carbon, but is not limited thereto. Preferably, the porous carbon material may be a carbon nanotube.

The sulfur-carbon composite may include 60 to 90 parts by weight, preferably 65 to 85 parts by weight, and more preferably 70 to 80 parts by weight of sulfur based on 100 parts by weight of the sulfur-carbon composite. When the sulfur content is less than the above-described range, the content of the porous carbon material in the sulfur-carbon composite relatively increases, resulting in an increase in specific surface area, thereby increasing the content of a binder during slurry preparation. The increase in a usage amount of the binder increases the sheet resistance of the positive electrode and act as an insulator to prevent electron pass, so that the battery performance may be degraded. On the contrary, when the sulfur content is greater than the above-described range, sulfur or a sulfur compound not bonded with the porous carbon material aggregates with each other or is re-eluted to the surface of the porous carbon material, making it difficult to receive electrons and thus cannot participate in an electrochemical reaction, so that a loss of capacity of the battery may occur.

In addition to the above-described compositions, the positive electrode active material may further include one or more additives selected from a transition metal element, a Group 2 element, a Group 3 element, a sulfur compound thereof, and an alloy of the elements and sulfur. The transition metal element may include Sc, Ti, V, Cr, Mn, Fe, Co, Ni, Cu, Zn, Y, Zr, Nb, Mo, Tc, Ru, Rh, Pd, Os, Ir, Pt, Au, Hg, or the like, the Group 2 element may include Al, Ga, In, Ti, or the like, and the Group 3 element may include Ge, Sn, Pb, or the like.

The positive electrode active material may be included in the positive electrode active material layer in an amount of 50 wt% to 99 wt%, specifically 60 wt% to 90 wt%, more specifically 65 wt% to 85 wt%. When the content of the positive electrode active material is less than the above range, it is difficult for an electrochemical reaction of the positive electrode to be sufficiently exerted, and on the contrary, when greater than the above range, the content of a conductive material and the content of a binder to be described below are relatively insufficient, so that the resistance of the positive electrode is increased, and there is a problem in that physical properties of the positive electrode are degraded.

The positive electrode may further include an positive electrode conductive material, and the positive electrode conductive material electrically connects an electrolyte and the positive electrode active material, thereby serving as a path through which electrons to pass from a current collector to the positive electrode active material, and any conductive material may be used without limitation as long as it has porosity and conductivity. For example, a carbon-based material having porosity may be used as the positive electrode conductive material, and examples of the carbon-based material may include carbon black, graphite, graphene, activated carbon, a carbon fiber, and the like, and a metallic fiber such as a metal mesh, a metallic powder of such as copper, silver, nickel, and aluminum, or an organic conductive material such as a polyphenylene derivative. The above conductive materials may be used alone or in combination.

The positive electrode conductive material may be included in the positive electrode active material layer in an amount of 1 wt% to 10 wt%, specifically 4 wt% to 7 wt%. When the content of the conductive material is less than the above range, unreacted portion of the sulfur in the positive electrode increases, which eventually causes a decrease in capacity. On the contrary, when greater than the above range, it adversely affects the high-efficiency discharge properties and charge/discharge cycle lifespan, so it is preferable to determine an appropriate content within the above-described range.

The positive electrode may further include a positive electrode binder, wherein the positive electrode binder is to increase the bonding force between components constituting the positive electrode and between the components and a current collector, and all binders known in the art may be used. For example, the positive electrode binder may use one, or a mixture or polymer of two or more selected from the group consisting of a fluorine resin-based binder including polyvinylidene fluoride (PVdF) or polytetrafluoroethylene (PTFE); a rubber-based binder including styrene-butadiene rubber (SBR), acrylonitrile-butadiene rubber, or styreneisoprene rubber; a cellulose-based binder including carboxyl methyl cellulose (CMC), starch, hydroxypropyl cellulose, and regenerated cellulose; a polyvinyl alcohol-based binder; a polyolefin-based binder including polypropylene; a polyimide-based binder; a polyester-based binder; and a silane-based binder.

The positive electrode binder may be included in the positive electrode active material layer in an amount of 1 wt% to 10 wt%. When the content of the positive electrode binder is less than the above range, physical properties of the positive electrode may be degraded, thereby causing positive electrode active material and the positive electrode conductive material to be separated, and when greater than the above range, the ratio of the positive electrode active material and the positive electrode conductive material may be relatively reduced in the positive electrode, thereby reducing a battery capacity, so it is preferable to determine an appropriate content within the above-described range.

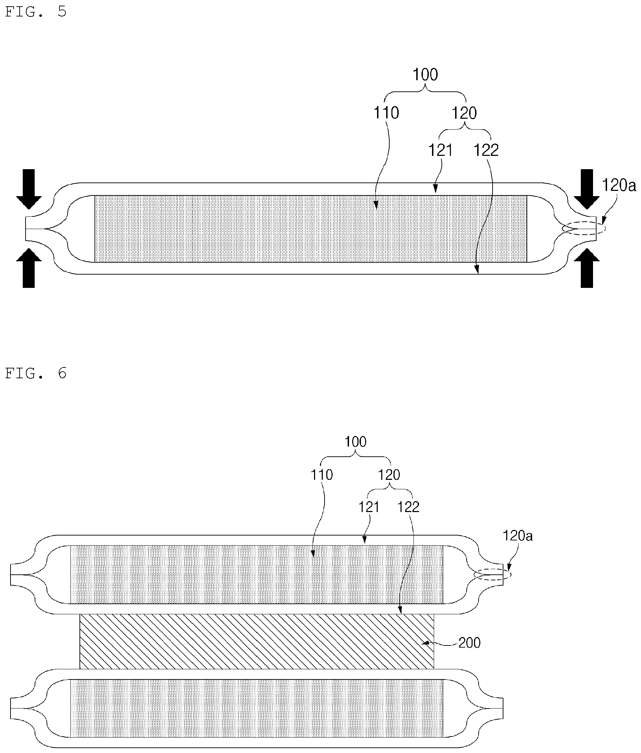

Referring to FIG. 6, the positive electrode 200 may be present in contact with the negative electrode-separator composite 100. Specifically, the separator 120 may be disposed between the positive electrode 200 and the negative electrode 110.

### 4) Electrolyte

The lithium secondary battery may further include an electrolyte.

The electrolyte may be an organic liquid electrolyte, an inorganic liquid electrolyte, a solid polymer electrolyte, a gel-type polymer electrolyte, a solid inorganic electrolyte, a molten-type inorganic electrolyte, and the like, which may be used in the preparation of a lithium secondary battery, but is not limited thereto.

Specifically, the electrolyte may include a non-aqueous organic solvent and a lithium salt.

As the non-aqueous organic solvent, for example, an aprotic organic solvent, such as N-methyl-2-pyrrolidone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, diemthylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate may be used.

Particularly, among the carbonate-based organic solvents, a cyclic carbonate such as ethylene carbonate and propylene carbonate may preferably be used since it is an organic solvent of high viscosity and has high dielectric constant to dissociate a lithium salt well. Such a cyclic carbonate may be more preferably used since when it is mixed with a linear carbonate of low viscosity and low dielectric constant such as dimethyl carbonate and diethyl carbonate in an appropriate ratio, an electrolyte having a high electric conductivity is prepared.

As the metal salt, a lithium salt may be used, wherein the lithium salt is a material which is easily dissolved in the non-aqueous electrolyte solution, and for example, as an anion of the lithium salt, one or more selected from the group consisting of F-, Cl-, I-, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN-, and (CF₃CF₂SO₂)₂N⁻ may be used.

In the electrolyte, in order to improve the lifespan properties of a battery, to suppress the decrease in battery capacity, and to improve the discharge capacity of the battery, one or more additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like may be further included other than the above electrolyte components.

### <Method for manufacturing lithium secondary battery>

A method for manufacturing a lithium secondary battery according to another embodiment of the present disclosure includes the steps of disposing a first separator on one surface of a negative electrode including a lithium metal layer and disposing a second separator on the other surface of the negative electrode, and adhering at least a portion of an edge of the first separator and at least a portion of an edge of the second separator to each other to form a sealing portion, thereby preparing a negative electrode-separator composite, wherein the air permeability of the sealing portion may be 50,000 sec/100 cc or greater.

The lithium metal layer, the negative electrode, the first separator, the second separator, the sealing portion, the negative electrode-separator composite, the sealing portion, and the lithium secondary battery are the same as the lithium metal layer, the negative electrode, the first separator, the second separator, the sealing portion, the negative electrode-separator composite, the sealing portion, and the lithium secondary battery in the above embodiment, and thus detailed descriptions thereof will be omitted.

Referring to FIG. 4, a first separator 121 may be disposed on one surface of a negative electrode 110, and a second separator 122 may be disposed on the other surface of the negative electrode 110. Since the width of the first separator 121 and the width of the second separator 122 are greater than the width of the negative electrode 110, the first separator 121 and the second separator 122 each include an edge not in contact with the negative electrode 110.

Referring to FIG. 5, in the step of adhering at least a portion of an edge of the first separator 121 and at least a portion of an edge of the second separator 122 to each other to form a sealing portion 120a, thereby preparing a negative electrode-separator composite, the sealing portion 120a may be formed by thermally fusing the at least a portion of an edge of the first separator 121 and the at least a portion of an edge of the second separator 122 to each other.

The thermal fusion may be performed at a temperature of 110°C to 140°C, specifically 120°C to 135°C, and more specifically, 125°C to 135°C. When the above range is satisfied, pores of the sealing portion 120a may be effectively closed, and specifically, the air permeability of the sealing portion 120a may be 50,000 sec/100 cc or greater. Accordingly, even when the positive electrode active material uses a positive electrode active material containing a sulfur element, it is difficult for lithium polysulfide formed in the positive electrode to pass through the sealing portion 120a, so that it is possible to effectively prevent the lithium polysulfide from causing a side reaction in the negative electrode.

The thermal fusion may include applying a pressure of 100 psi to 300 psi, specifically 120 psi to 250 psi, and more specifically 150 psi to 200 psi. When the above range is satisfied, the pores of the sealing portion may be uniformly closed.

Referring to FIG. 6, a step of disposing the negative electrode-separator composite 100 and the positive electrode 200 in contact with each other may be further included. The positive electrode is the same as the positive electrode introduced in the above-described embodiment, and thus, a description of the positive electrode will be omitted.

The method for manufacturing a lithium secondary battery is different from a method in which an electrode assembly including a negative electrode, a positive electrode, a first separator, and a second separator is manufactured and then the first separator and the second separator are disposed to be in contact with each other. Specifically, the method for manufacturing a lithium secondary battery of the present disclosure may first manufacture a negative electrode-separator composite through a negative electrode, a first separator, and a second separator, and then dispose the positive electrode and the negative electrode-separator composite in contact with each other.

When a sealing portion is formed by adhering at least a portion of an edge of the first separator and at least a portion of an edge of the second separator before manufacturing an electrode assembly, the negative electrode and the first separator (or the second separator) may come into closer contact with each other and form a negative electrode-separator composite. Accordingly, in the negative electrode-separator composite, an empty space (a so-called death space) between the negative electrode and the first separator (or the second separator) may be reduced, so that the growth of lithium in a horizontal direction of the negative electrode may be more effectively suppressed.

According to another embodiment of the present disclosure, a battery module including the lithium secondary battery as a unit cell and a battery pack including the same are provided. The battery module and the battery pack include the lithium secondary battery having high capacity, high rate properties, and cycle properties, and thus may be used as a power source of a medium-and-large sized device selected from the group consisting of an electric vehicle, a hybrid electric vehicle, a plug-in hybrid electric vehicle, and a power storage system.

Hereinafter, preferred embodiments of the present disclosure will be described in detail to facilitate understanding of the present disclosure. However, the embodiments are merely illustrative of the present disclosure, and thus, it will be apparent to those skilled in the art that various modifications and variations can be made without departing from the scope and spirit of the present disclosure as disclosed in the accompanying claims. It is obvious that such variations and modifications fall within the scope of the appended claims.

### Examples and Comparative Examples

### Example 1: Manufacturing of lithium secondary battery

### (1) Preparation of negative electrode-separator composite

A polyethylene porous film (porosity of 68%) having a thickness of 16 um was used as a first separator and a second separator, respectively. The first separator was disposed on one surface of a negative electrode made of a lithium metal layer (lithium foil) having a thickness of 80 um, and the second separator was disposed on the other surface (the opposite surface to the one surface) of the negative electrode. Horizontal and vertical lengths of the first separator were 1 mm greater than horizontal and vertical lengths of the negative electrode, and horizontal and vertical lengths of the second separator were 1 mm greater than the horizontal and vertical lengths of the negative electrode.

Thereafter, except for a point at which a negative electrode tab was in contact with the first separator and the second separator, a portion in which the first separator and the negative electrode were not in contact with each other (an edge of the first separator) and a portion in which the first separator and the negative electrode were not contact with each other (an edge of the second separator) adhered to each other to form a sealing portion along four side surfaces of the negative electrode. The adhesion was performed by thermal fusion at a temperature of 130°C and a pressure of 170 psi. The sealing portion was formed surrounding the four side surfaces of the negative electrode, and the air permeability of the sealing portion was 89,000 sec/100 cc. The air permeability was measured under the conditions of Time: 6 sec, Value: 500, and Measure Mode: JIS (sec) using Oken Type Air-permeability & Smoothness Testing Controller equipment of ASAHI SEIKO Company.

### (2) Manufacturing of positive electrode

A sulfur-carbon composite (S:C=75:25) as a positive electrode active material, and styrene butadiene rubber and carboxymethyl cellulose (SBR:CMC=7:3) as a positive electrode binder were mixed in deionized (DI) water as a solvent to prepare a positive electrode slurry composition. The positive electrode slurry composition was applied to both sides of an aluminum current collector, dried at 80°C, and then roll-pressed to manufacture a positive electrode including a positive electrode active material layer (loading amount: 2.7 mAh/cm²). The sulfur-carbon composite was included in the positive electrode active material layer in an amount of 96 wt%, and the positive electrode binder was included in the positive electrode active material layer in an amount of 4 wt%.

### (3) Manufacturing of lithium secondary battery

Eight of the negative electrode-separator composite and seven of positive electrode were prepared, and then the negative electrode-separator composite and the positive electrode were alternately laminated such that the negative electrode and the positive electrode were spaced apart from each other with the separator interposed therebetween, thereby manufacturing an electrode assembly. Thereafter, the electrode assembly was placed into a battery case, and an electrolyte (a mixed solution in which lithium bis(trifluoromethanesulfonyl)imide (LiTFSI) having a concentration of 1M and 1 wt% of a lithium nitrate (LiNO₃) were dissolved in an organic solvent consisting of 1,3-dioxolane and dimethyl ether (DOL:DME=1:1 (volume ratio)) was injected into the battery case, and then the battery case was sealed to manufacture a lithium secondary battery (a lithium-sulfur secondary battery).

### Comparative Example 1: Manufacturing of lithium secondary battery

A polyethylene porous film having a thickness of 16 um was prepared as a separator (14 in total), and 8 of the negative electrode used in Example 1 and 7 of the positive electrode used in Example 1 were prepared. The negative electrode and the positive electrode were alternately laminated, and a separator was disposed between the negative electrode and the positive electrode to form an electrode assembly. That is, there was no sealing portion as in Example 1 because the separators were not sealed by adhering to each other.

Thereafter, the electrode assembly was placed into a battery case, and an electrolyte (a mixed solution in which lithium bis(trifluoromethanesulfonyl)imide (LiTFSI) having a concentration of 1M and 1 wt% of a lithium nitrate (LiNO₃) were dissolved in an organic solvent consisting of 1,3-dioxolane and dimethyl ether (DOL:DME=1:1 (volume ratio)) was injected into the battery case, and then the battery case was sealed to manufacture a lithium secondary battery (a lithium-sulfur secondary battery). Unlike Example 1, the lithium secondary battery of Comparative Example 1 did not include a negative electrode-separator composite including a sealing portion.

### Comparative Example 2: Manufacturing of lithium secondary battery

A lithium secondary battery was manufactured in the same manner as in Example 1, except that a temperature of 100°C was used as an adhesion temperature when adhering the separator. The sealing portion was formed surrounding the four side surfaces of the negative electrode, and the air permeability of the sealing portion was 3,000 sec/100 cc. The air permeability was measured under the conditions of Time: 6 sec, Value: 500, and Measure Mode: JIS (sec) using Oken Type Air-permeability & Smoothness Testing Controller equipment of ASAHI SEIKO Company.

### Experimental Example 1: Evaluation of discharge capacity per cycle and evaluation of coulomb efficiency per cycle of lithium secondary battery

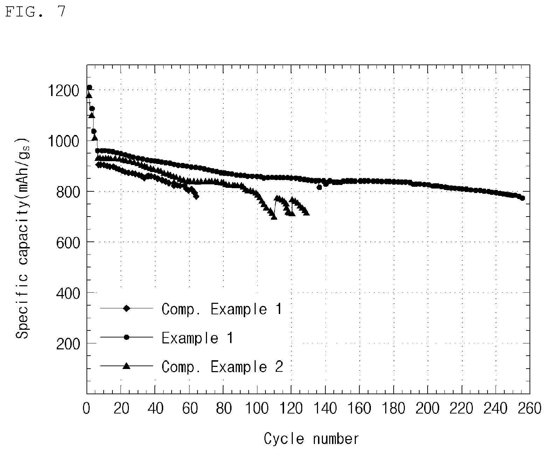

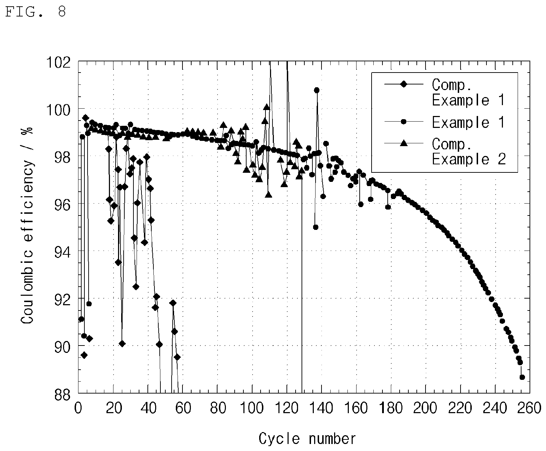

Charge and discharge were performed at 25°C for each of the lithium secondary batteries of Example 1 and Comparative Examples 1 and 2, and the discharge capacity per cycle and Coulombic efficiency per cycle were shown as graphs (FIG. 7 and FIG. 8), respectively. Per one cycle, charging was performed 0.2 C (charged to 2.5 V) and discharging was performed at 2.0 C (discharged to 1.7 V) (CC mode).

FIG. 7 shows a discharge capacity per cycle, and FIG. 8 shows a Coulombic efficiency per cycle (ratio of discharge capacity based on 100% of charge capacity).

Referring to FIG. 7 and FIG. 8, it can be seen that the lithium secondary battery of Example 1 has an excellent discharge capacity and an excellent Coulombic efficiency per cycle compared to those of the lithium secondary batteries of Comparative Examples 1 and 2.

### Experimental Example 2: Checking for non-uniform growth of lithium

While conducting the test of Experimental Example 1 for Example 1 and Comparative Example 1, a change in the negative electrode in the battery of Example 1 and a change in the negative electrode in the battery of Comparative Example 1 were confirmed.

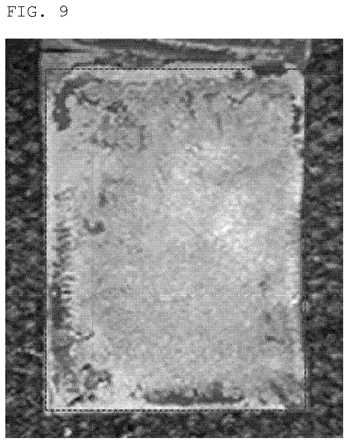

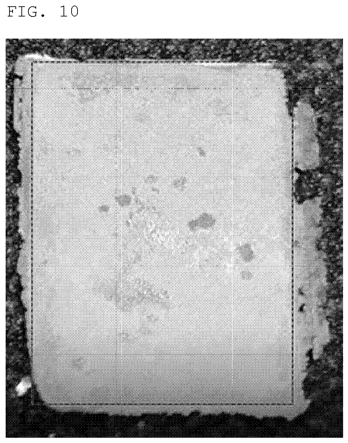

Specifically, FIG. 9 is a photograph of the negative electrode in the battery of Example 1 after 240 cycles, and FIG. 10 is a photograph of the negative electrode in the battery of Comparative Example 1 after 60 cycles. The dotted lines in the photographs indicate the original size of the negative electrodes before the driving of the batteries. (In Comparative Example 1, the cell drive stopped due to a voltage drop after 60 cycles, so the negative electrode at the 60-th cycle had to be confirmed).

Referring to FIG. 9, it can be seen that the negative electrode used in the battery of Example 1 retained the initial size thereof even after 240 cycles. On the other hand, referring to FIG. 10, it can be seen that the size of the negative electrode increased due to non-uniform growth of lithium on a side surface of the negative electrode although only 60 cycles had elapsed.

### [Description of Reference Numerals]

Negative electrode-separator composite (100)
Negative electrode (110)
Separator (120)
First separator (121)
Second separator (122)
Edge of first separator (121')
Edge of second separator (122')
Sealing portion (120a)
Positive electrode (200)

## Claims

1. A lithium secondary battery comprising a negative electrode-separator composite which includes a negative electrode and a separator,
wherein the negative electrode includes a lithium metal layer, and
wherein the separator includes a first separator disposed on one surface of the negative electrode and a second separator disposed on the other surface of the negative electrode,
wherein at least a portion of an edge of the first separator and at least a portion of an edge of the second separator adhere to each other to form a sealing portion while the first separator and the second separator accommodate the negative electrode therein,
wherein the sealing portion has air permeability of 50,000 sec/100 cc or greater.

2. The lithium secondary battery of claim 1, wherein the air permeability of the sealing portion is 65,000 sec/100 cc to 100,000 sec/100 cc.

3. The lithium secondary battery of claim 1, wherein the negative electrode includes a negative electrode tab, and
wherein the sealing portion is formed such that the rest of the negative electrode except for the negative electrode tab is not exposed to the outside of the separator.

4. The lithium secondary battery of claim 1, wherein the negative electrode-separator composite further comprises an adhesive layer disposed between the negative electrode and the separator and including an adhesive binder.

5. The lithium secondary battery of claim 1, wherein the separator further comprises a coating layer including pores having an average pore diameter of 0.1 nm to 1,000 nm.

6. The lithium secondary battery of claim 1, wherein the lithium secondary battery further comprises a positive electrode including a positive electrode active material,
wherein the separator is disposed between the positive electrode and the negative electrode.

7. The lithium secondary battery of claim 6, wherein the positive electrode active material comprises one or more selected from the group consisting of an inorganic sulfur (S₈), Li₂Sₙ₁(n1≥1), a disulfide compound, an organic sulfur compound, and a carbon-sulfur polymer ((C₂Sₓ)ₙ₂, x=2.5 to 50, n2≥2).

8. A method for manufacturing a lithium secondary battery, the method comprising:
disposing a first separator on one surface of a negative electrode including a lithium metal layer and disposing a second separator on the other surface of the negative electrode; and
adhering at least a portion of an edge of the first separator and at least a portion of an edge of the second separator to each other to form a sealing portion, thereby preparing a negative electrode-separator composite,
wherein air permeability of the sealing portion is 50,000 sec/100 cc or greater.

9. The method of claim 8, wherein the sealing portion is formed by thermally fusing the at least a portion of an edge of the first separator and the at least a portion of an edge of the second separator to each other.

10. The method of claim 9, wherein the thermal fusion is performed at a temperature of 110°C to 140°C.

11. The method of claim 8, further comprising a step of disposing the negative electrode-separator composite in contact with a positive electrode.
